# EUROPÄISCHE PATENTSCHRIFT

(11) **EP 0 557 487 B1**
(45) Veröffentlichungstag und Bekanntmachung des Hinweises auf die Patenterteilung: **29.01.1997**
(21) Anmeldenummer: 92919022.1
(22) Anmeldetag: 11.09.1992
(51) Int. Cl.: B29C 45/16, B65D 41/32

(54) **VERSCHLUSSEINHEIT AN GEBINDE FÜR FLIESSFÄHIGES GUT**
CLOSURE UNIT FOR CONTAINERS OF FLOWABLE GOODS
UNITE DE FERMETURE DE RECIPIENTS DE MATIERES COULANTES

(30) Priorität: 17.09.1991 CH 2739/91; 17.09.1991 CH 2740/91
(43) Veröffentlichungstag der Anmeldung: 01.09.1993
(73) Patentinhaber: Tetra Laval Holdings & Finance SA, 1009 Pully (CH)
(72) Erfinder: MOCK, Elmar, CH-2504 Bienne (CH)
(74) Vertreter: Frei, Alexandra Sarah
(86) Internationale Anmeldenummer: CH9200188
(87) Internationale Veröffentlichungsnummer: WO9305945

(56) Entgegenhaltungen:
- EP-A- 0 079 676
- DE-A- 1 941 479
- DE-A- 2 636 259
- PATENT ABSTRACTS OF JAPAN vol. 10, no. 207 (M-500)(2263) 19. Juli 1986 & JP-A-61 47 223 (KAMAYA KAGAKU KOGYO KK) siehe Zusammenfassung

## Beschreibung

Die Erfindung liegt auf dem Gebiete der Verpackungstechnik und betrifft eine Verschlusseinheit für ein Gebinde für fliessfähiges Gut gemäss dem Oberbegriff des ersten unabhängigen Patentanspruches, sowie ein Herstellungsverfahren zur Herstellung der Verschlusseinheit und ein beschichtetes Kartongebinde mit einer entsprechenden Verschlusseinheit gemäss den Oberbegriffen der weiteren unabhängigen Patentansprüche.

Gebinde für fliessfähiges Gut brauchen eine Öffnung oder eine potentielle Öffnung, durch die das Gut entnommen werden kann. Es ist vorteilhaft, wenn diese Öffnung auch nach einem ersten Öffnen wieder dicht verschliessbar ist, denn nur dadurch ist es möglich, das Gebinde nach einer ersten Entnahme gleich zu handhaben wie vor der ersten Entnahme. Aus diesem Grunde sind die meisten derartigen Gebinde mit einer Verschlusseinheit ausgestattet, die verschiedenste Formen haben und aus verschiedensten Materialien hergestellt sein kann. Bekannte Beispiele für derartige Verschlusseinheiten sind Stopfen aus Kork und anderen Materialien, Schraubverschlüsse aus Kunststoff oder Metall, Bügelverschlüsse mit Keramikstopfen und Gummidichtung, Schliffstopfen aus Glas, Schnappverschlüsse aus Kunststoff und so weiter, wie bspw. in der Schrift DE-A-2 636 259 offenbart. Gebinde ohne Verschlusseinheit können nach dem ersten Öffnen nicht mehr dicht verschlossen werden. Zu ihnen gehören beispielsweise Glasampullen und viele Getränkebehälter aus Metall, beschichtetem Karton oder Kunststoff, wie bspw. in der Schrift DE-A-1 941 479 offenbart.

Verschlusseinheiten bestehen im Falle von Gebinden mit Hals meist nur aus einem Verschlussteil, der auf dem Hals sitzt (Gebinde geschlossen) oder nicht (Gebinde offen), der also mit dem Gebinde eine reversible, dichte Verbindung bilden kann. Im Falle von Gebinden ohne Hals besteht die Verschlusseinheit meist aus einem Ausgussteilteil (oder Halsteil) und einem Verschlussteil, wobei der Ausgussteil im wesentlichen irreversibel und dicht am Gebinde angeschlossen ist, während der Verschlussteil und der Ausgussteil zusammen eine reversible, dichte Verbindung bilden. In allen Fällen ist die Funktion der Verschlusseinheit das Verschliessen einer Öffnung oder potentiellen Öffnung im Gebinde derart, dass die Öffnung durch einfache Handgriffe geöffnet und wieder dicht verschlossen werden kann. Die Verschlusseinheit ist derart gestaltet, dass zwischen dem Verschlussteil und dem Gebinde (Verschlusseinheit ohne Ausgussteil) bzw. zwischen dem Verschlussteil und dem Ausgussteil (Verschlusseinheit mit Ausgussteil und Verschlussteil) mit einfachen Handgriffen eine dichte Verbindung erstellt und wieder gelöst werden kann.

Das dichte Abschliessen des Gebindes ist die Hauptaufgabe der Verschlusseinheit und bestimmt auch im wesentlichen ihre Ausgestaltung und ihr Material. In vielen Fällen soll aber die Verschlusseinheit weitere Funktionen übernehmen. Dies ist zum Beispiel: im Falle von grossen Öffnungen eine minimale mechanische Tragfunktion; im Falle des Korkens für Weinflaschen eine minimale Gasdurchlässigkeit; für die Bequemlichkeit der Handhabung beispielsweise eine bleibende Verbindung zwischen Gebinde und Verschlussteil; aus Sicherheitsgründen Mittel, die einen ersten Öffnungsvorgang von aussen sichtbar machen; und so weiter. Für den Fall einer Verschlusseinheit, die einen Verschlussteil und einen Ausgussteil aufweist, ist die wichtigste Zusatzfunktion neben der in diesem Falle irreversiblen, dichten Verbindung mit dem Gebinde die reversible Dichtung zwischen den beiden Teilen.

Eine derartige Multifunktionalität der Verschlusseinheit legt eine Verschlusseinheit aus mehreren Materialien nahe, da dann für jede Funktion ein optimal geeignetes Material eingesetzt werden kann.

Viele Verschlusseinheiten aus mehreren Materialien sind bekannt, beispielsweise der Schraubdeckel mit der Dichtungseinlage (Funktionen: Stabilität/Formschluss, Dichtung), der Korkstopfen mit der Zinnkappe (Funktionen: Dichtung, Sichtbarmachung der ersten Öffnung), der Bügelverschluss mit dem Metallbügel, dem Keramikstopfen und der Gummidichtung (Funktionen: Verbindung von Gebindehals und Verschlussteil auch in geöffnetem Zustand, mechanische Stabilität, Dichtung). Der Nachteil aller dieser Verschlusseinheiten gegenüber Verschlusseinheiten, die aus einem Material gefertigt sind, ist die aufwendigere Herstellung. Jeder einzelne Teil muss separat hergestellt werden, dann müssen die einzelnen Teile zusammenmontiert werden und als Einheit am Gebinde befestigt werden, oder die einzelnen Teile müssen in separaten Schritten am Gebinde montiert werden.

Ähnliche Nachteile sowie eine Reihe von Verbesserungswünschen, die im folgenden detailliert werden sollen, treten auch bei Verschlusseinheiten auf, die aus einem Ausgussteil und einem Verschlussteil bestehen, insbesondere bei derartigen Verschlusseinheiten, wie sie für beschichtete Kartongebinde für Getränke dem Stande der Technik entsprechen.

Gebinde aus beschichtetem Karton für fliessfähiges Gut sind insbesondere in der Nahrungsmittelindustrie als Gebinde für Getränke sehr verbreitet. Es gibt davon im wesentlichen zwei Arten. Sie werden entweder als quasi endloser Schlauch produziert, dann in einem Arbeitsgang gefüllt und auf beiden Seiten verschlossen und anschliessend durch Abfalten der Ecken in eine beispielsweise rechteckige Form gebracht. Derartig hergestellte Gebinde sind vollständig mit Flüssigkeit gefüllt. Vor dem Öffnen muss durch Auffalten von mindestens einer Ecke ein leichter Unterdruck hergestellt werden, damit das Gebinde durch Abreissen eines Eckbereiches ohne Überlaufen geöffnet werden kann. Die aufgefaltete Ecke dient dann gleichzeitig als Ausguss. Andererseits können die Kartongebinde in leerem Zustand zu an einem Ende offenen Gebinden vorproduziert werden, die dann gefüllt und am offenen Ende durch Falten und Verschweissen geschlossen werden. Derartige Gebinde sind nicht ganz mit Flüssigkeit gefüllt. Auch an diesen Gebinden wird üblicherweise durch Auffalten ein Ausguss erstellt, an dem dann das Gebinde durch Aufreissen geöffnet wird. Das Aufreissen des Kartongebindes bedeutet ein irreversibles Öffnen. Die Gebinde können, wenn sie einmal geöffnet sind, nicht wieder dicht verschlossen werden, was ihre Anwendung limitiert.

Um in der Anwendung weniger limitierte derartige Kartongebinde zu erhalten, sind verschiedene Verschlusseinheiten aus verschiedenen Materialien geschaffen worden, mit deren Hilfe die Gebinde nach dem ersten Öffnen wieder dicht verschlossen werden können. Derartige Verschlusseinheiten werden vor der Füllung an den Gebinden angebracht und zwar in geschlossenem Zustand, da sie nicht als Einfüllöffnungen dienen müssen. Damit eine derartige Verschlusseinheit das Gebinde wirklich verbessert und seine Anwendung erweitert, ihren Preis aber nicht ins Unannehmbare steigert, müssen daran verschiedene Anforderungen gestellt werden. Die folgende Liste zeigt die wichtigsten dieser Anforderungen in etwa nach ihrer Priorität aufgelistet:
- Die Verschlusseinheit soll aus Materialien hergestellt werden können, die für den Kontakt mit Nahrungsmitteln geeignet, ökologisch unanfechtbar und kostengünstig sind.
- Die Verschlusseinheit soll kostengünstig hergestellt und am Gebinde angebracht werden können, das heisst es sollen zur Herstellung und Montage möglichst wenig verschiedene Arbeitsschritte, optimal ein Herstellungsschritt und ein Montageschritt, notwendig sein.
- Die Verschlusseinheit soll einen Verschlussteil aufweisen, der beliebig viele Male geöffnet und wieder dicht verschlossen werden kann.
- Die Verschlusseinheit soll einen Ausgussteil aufweisen, damit das Kartongebinde zur Bildung eines Ausgusses nicht aufgefaltet werden muss.
- Die Verschlusseinheit soll derart beschaffen sein, dass das Gebinde insbesondere vor dem ersten Öffnen die Strapazen eines unsorgfältigen Transportes unbeschadet überstehen kann.
- Die Verschlusseinheit soll ohne grossen Kraftaufwand und mit simplen Handgriffen geöffnet werden können, auch bei der ersten Öffnung.
- Die Verschlusseinheit soll hygienisch handhabbar sein, das heisst, ihre normale Handhabung soll kein Eingreifen in die Ausgussöffnung notwendig machen.
- Die Verschlusseinheit soll für eine bequeme Handhabung für jeden normalen Gebrauch des Gebindes als Ganzes mit dem Gebinde verbunden sein, das heisst, einerseits sollen beim ersten Öffnen keine Abfallteile entstehen und andererseits soll der Verschlussteil durch eine dauernde Verbindung am Ausgussteil befestigt sein, trotzdem aber das Ausgiessen in keiner Weise behindern.
- Die Verschlusseinheit soll form- und farbmässig in sehr vielen Varianten realisierbar sein, die alle hohen ästhetischen Ansprüchen genügen sollen.

Es sind verschiedene Verschlusseinheiten für die genannte Anwendung bekannt, die an innenbeschichteten Kartongebinden angebracht werden oder angebracht werden können. Im folgenden sollen einige davon kurz beschrieben und mit der obigen Anspruchsliste an eine ideale Verschlusseinheit verglichen werden.

Eine derartige Verschlusseinheit besteht beispielsweise aus einem Ausgussteil und einem Schraub- oder Schnappdeckel, die in neuem Zustand durch einen Reissring miteinander verbunden sind, wobei alle Teile aus einem thermoplastischen Kunststoffmaterial bestehen. Der Ausgussteil und der Deckel, an den der Reissring mit einer Sollbruchstelle angeformt ist, werden einzeln hergestellt, aufeinander montiert, Reissring und Ausgussteil miteinander verschweisst und dann auf dem Gebinde meist durch Verschweissen mit der Innenbeschichtung angebracht, wobei die Verschweissung mit dem Gebinde und die Verschweissung von Reissring und Ausgussteil in einem Arbeitsschritt durchgeführt werden können. Gemessen an der obigen Anforderungsliste hat diese Verschlusseinheit den Nachteil, dass ihre Herstellung und Montage zu viele Arbeitsschritte notwendig macht, insbesondere wenn aus Hygienegründen nach der Zusammenmontage der beiden Teile ein Reinigungsschritt notwendig ist. Ferner stellt der Reissring ein Abfallteil dar, das nach dem ersten Öffnen anfällt. Der Schraub- oder Schnappdeckel muss beim Öffnen völlig vom Ausgussteil entfernt werden und geht dadurch gerne verloren. Der Schraubdeckel muss immer rund sein, der Schnappdeckel ist vorteilhafterweise rund, was beides sehr limitierte Formenmöglichkeiten bedeutet.

Etwa dieselben Nachteile weisen Verschlusseinheiten auf, die innerhalb des Ausgussteiles eine Dichtmembran aufweisen, die beim ersten Öffnen entfernt werden muss. Eine derartige Membran dient als zusätzliche Dichtung vor der ersten Öffnung. Eine derartige Membran kann meist nur entfernt werden, indem man mit den Fingern in die Ausgussöffnung greift, was der Anforderung nach hygienischer Handhabung nicht genügt.

Andere Verschlusseinheiten mit Dichtmembranen in der Ausgussöffnung sind mit Durchsteckteilen versehen, die entweder von Hand (Hygiene!) oder automatisch beim ersten Abschrauben des Schraubdeckels durch die Membran gestossen werden. Derartige Verschlusseinheiten sind wiederum nur in einer Mehrzahl von Herstellungsschritten herstellbar, können aber als zusätzlichen Vorteil im Durchsteckteil einen Entlüftungskanal aufweisen, der ein stotterfreies Eingiessen auch aus einem relativ engen Ausguss ermöglicht.

Verschlusseinheiten mit Schnappdeckeln können auch einstückig gegossenen werden, wobei der Ausgussteil (mit oder ohne zusätzliche Dichtmembran) über einen Verbindungsteil miteinander verbunden sind, wobei dieser Verbindungsteil auch als dauernde Verbindung zwischen den beiden Teilen dienen kann. Derartige Verschlusseinheiten erfüllen zwar die Anforderung nach einer einschrittigen Herstellung, müssen aber nach dieser Herstellung geschlossen werden, was einen weiteren Herstellungsschritt bedeutet. Dies kann umgangen werden, indem in den Ausgussteil eine Membran gegossen wird, die genügend Stabilität aufweist, um für das Gebinde vor der ersten Öffnung einen genügend stabilen Verschluss darzustellen. In einem solchen Falle kann das Gebinde mit "geöffneter" Verschlusseinheit in den Handel gelangen. Vergleicht man derartige Verschlusseinheiten mit der Anforderungsliste, stellt man fest, dass die Herstellung zwar in einem Schritt möglich ist, dass sie aber enorm komplizierte Giessformen bedingt und dass die Ausgestaltung des Deckels formmässig zwar wenig limitiert, materialmässig aber sehr limitiert ist. Das Material der ganzen Verschlusseinheit muss mit dem Gebinde, meist mit der Beschichtung, einfach, beispielsweise durch Verschweissen dicht verbunden werden können, und wird dadurch in engen Grenzen bestimmt. Da Kartongebinde meist mit Polyäthylen beschichtet sind, ist die gesamte Verschlusseinheit ebenfalls aus Polyäthylen hergestellt und kann dadurch keinen höheren ästhetischen Anforderungen genügen.

Ähnliches gilt für Verschlusseinheiten, die im wesentlichen aus einer Verschlussmembran bestehen, die ein erstes Mal entlang einer Sollbruchstelle geöffnet wird und an die eine Dichtlippe derart angeformt ist, dass diese beim Wiederverschliessen die Dichtfunktion übernehmen kann. Derartige Verschlusseinheiten können zwar sehr kostengünstig einstückig hergestellt werden, sind aber im neuen Zustand empfindlich durch die exponierte Sollbruchstelle. Auch diese Verschlusseinheiten können keinen höheren ästhetischen Anforderungen genügen. Auch eine genügende Dichtigkeit nach dem ersten Öffnen kann eine derartige Verschlusseinheit nicht gewähren.

Offenbar genügt keine der oben kurz beschriebenen Verschlusseinheiten der vollen Anforderungsliste.

Es ist nun die Aufgabe der Erfindung, multifunktionale einteilige und zweiteilige Verschlusseinheiten und die Verfahren zu ihrer Herstellung dahingehend zu verbessern, dass die Verschlusseinheiten die Vorteile von Verschlusseinheiten aus mehreren Materialien zwar besitzen, dass sie aber bedeutend einfacher hergestellt und am Gebinde angebracht werden können. Ferner sollen zweiteilige Verschlusseinheiten (mit Ausgussteil und Verschlussteil), insbesondere derartige Verschlusseinheiten für beschichtete Kartongebinde für Getränke dahingehend verbessert werden, dass sie den wichtigen Anforderungen der oben angeführten Anforderungsliste besser genügen und dass sie mehr Anforderungen der Liste genügen.

Diese Aufgabe wird gelöst durch die Verschlusseinheit gemäss dem ersten unabhängigen Patentanspruch und dem Herstellungsverfahren gemäss dem weiteren unabhängigen Patentanspruch. Die abhängigen Patentansprüche beschreiben verschiedene Ausführungsformen der erfindungsgemässen Verschlusseinheit.

Die erfindungsgemässe Verschlusseinheit besteht aus mindestens zwei, sich in mindestens einer Eigenschaft unterscheidenden thermoplastischen Kunststoffmaterialien. Sie weist miteinander verbundene, meist einstückige Bereiche aus den verschiedenen Materialien auf. Die verschiedenen Materialien dienen verschiedenen Funktionen. Die Bereiche aus den einzelnen Materialien sind durch "Ineinandergreifen" ohne Verbindungsmittel miteinander verbunden. Dabei kann das Ineinandergreifen ein makroskopisches sein, indem die einzelnen Teile derart geformt sind, dass sie durch Formschluss ineinander integriert sind, und/oder es kann ein mikroskopisches sein derart, dass die Oberflächen der verschiedenen Materialien ineinander verschmolzen oder verschweisst sind. Dieses Ineinandergreifen der Materialien ist mindestens teilweise irreversibel, das heisst nur unter wenigstens teilweiser Zerstörung der Materialbereiche lösbar, kann aber auch teilweise reversibel sein (reversible Verbindung zwischen Ausgussteil und Verschlussteil).

Die erfindungsgemässe Verschlusseinheit wird durch Ineinandergiessen der verschiedenen Materialien (Mehrmaterialien-Spritzgusstechnik) hergestellt. Das Prinzip der Mehrmaterialien-Spritzgusstechnik beruht darauf, aus einem ersten thermoplastischen Kunststoffmaterial einen Vorspritzling zu giessen, diesen genügend abzukühlen, dass er mechanisch genügend stabil ist, um als Giessform zu dienen, die für das Giessen des Vorspritzlings verwendete Giessform mindestens teilweise zu wechseln und mit einem weiteren, thermoplastischen Kunststoffmaterial den fertigen Spritzteil zu giessen, indem der Vorspritzling teilweise als Giessform dient. Dadurch entstehen Spritzteile, die Berührungsflächen zwischen den zwei Materialien aufweisen. In derselben Weise können auch Spritzteile aus mehr als zwei Materialien gegossen werden.

Der eine Vorteil dieser Mehrmaterialien-Spritzgusstechnik beruht darauf, dass mit dieser Technik ineinander integrierte Teile gegossen werden können, die anders nur durch mehr oder weniger komplizierte Montageschritte hergestellt werden können. Es können also durch Formschluss verbundene Teile gegossen werden, wobei dieser Formschluss je nach Ausgestaltung und Elastizität des Materials reversibel oder irreversibel sein kann.

Der andere Vorteil der Mehrmaterialien-Spritzgusstechnik beruht darauf, dass durch die Wahl der verschiedenen, verwendeten Materialien und durch die energetische Führung des Giessprozesses die Berührungsflächen zwischen den Materialien beeinflusst werden können. Je nach Eigenschaften der verwendeten thermoplastischen Kunststoffmaterialien und den energetischen Verhältnissen während dem Spritzen wird das auf ein bereits gegossenes Material aufgegossene Material dieses in verschiedenem Masse wieder aufschmelzen und sich in verschiedenem Masse mit diesem vermischen. Dadurch können mit entsprechender Materialpaarung und/oder mit entsprechender energetischer Führung des Giessprozesses Berührungsflächen mit sehr verschiedenen Charakteristiken hergestellt werden. Beispielsweise können die beiden Materialien fest miteinander verschweisst sein, sie können leicht aneinander haften oder die beiden Materialien können sich ohne jede Haftung einfach berühren. Verschweisste Berührungsflächen werden beispielsweise erreicht, indem gleiche Materialien, die sich beispielsweise in der Färbung unterscheiden, ineinander gegossen werden, wobei die Stärke der Verschweissung unter anderem von der Temperatur im Bereiche der Berührungsfläche während dem Giessen des zweiten Materials abhängig ist. Berührungsflächen ohne Haftung werden erreicht, indem Materialien, die sich im plastischen Zustand nicht mischen, aneinander gegossen werden. Ist die Vermischung der beiden Materialien temperaturabhängig, können je nach Temperaturen im Bereich der Berührungsflächen während dem Giessen verschiedene Haftungsstärken erzielt werden. Verschiedene Haftungsstärken können auch durch die sogenannte Polyblend-Methode erreicht werden, bei der dem zweiten Material ein variabler Prozentsatz des ersten Materials beigefügt wird, für eine leichte Haftung beispielsweise 10%.

Die beiden Vorteile der Mehrmaterialien-Spritzgusstechnik werden zur Herstellung der erfindungsgemässen Verschlusseinheiten voll ausgenützt. Dabei gelten die folgenden Randbedingungen: Die verwendeten Materialien werden primär durch ihre verschiedenen Funktionen bestimmt. Die Berührungsflächen zwischen den Bereichen aus verschiedenen Materialien sind an einteiligen Verschlusseinheiten durchwegs irreversibel miteinander verbunden. An zweiteiligen Verschlusseinheiten sind sie dort reversibel miteinander verbunden, wo sie gleichzeitig die Trennflächen der beiden Teile darstellen. Zweiteilige Verschlusseinheiten können mit dem beschriebenen Verfahren in geschlossenem Zustand gegossen werden.

Jede Verschlusseinheit muss rund um die Gebindeöffnung dicht an die Gebindeoberfläche angeschlossen werden können. Dies ist die Grundaufgabe der Verschlusseinheit und wird von einem Bereich der Verschlusseinheit übernommen, der aus einem Grundmaterial besteht. Die Eigenschaften des Grundmaterials werden denn auch durch diese Funktion weitgehend bestimmt. Für eine einteilige Verschlusseinheit ist die Grundfunktion eine reversible. Für eine zweiteilige Verschlusseinheit ist die Grundfunktion eine irreversible, während eine reversible dichte Verbindung zwischen Ausgussteil und Verschlussteil vorgesehen werden muss.

Diese reversible Verbindung zwischen Ausgussteil und Verschlussteil stellt eine unabdingbare Zusatzfunktion zur Grundfunktion der Verschlusseinheit dar und wird in der erfindungsgemässen zweiteiligen Verschlusseinheit durch ein Dichtflächenpaar übernommen, wobei die eine Dichtfläche des Paares aus dem Grundmaterial, die andere aus dem Zusatzmaterial besteht, wobei die beiden Materialien derart gewählt sind, dass sie beim Aneinandergiessen nur so stark miteinander verschweisst werden, dass sie ohne Zerstörung voneinander getrennt werden können. Die Formschlussmittel, die notwendig sind, um den Verschlussteil mit dem Ausgussteil stabil zu verbinden, können entweder durch eine entsprechende Form (z.B Gewinde) oder durch eine entsprechende Elastizität (Schnappverschluss) der beteiligten Materialien reversibel gestaltet werden.

Die Dichtigkeit zwischen Ausgussteil und Verschlussteil wird gewährleistet durch extrem gute Passform der Dichtflächenpaare (die eine Dichtfläche dient bei der Herstellung der anderen als Gussform), die eine Adhäsion zwischen den beiden Dichtflächen bewirkt. Ferner können die zwei beteiligten Materialien in bezug auf Wärmeausdehnungskoeffizient und die Verfahrensführung in bezug auf Temperaturen derart gewählt werden, dass die ineinandergegossenen Teile unter einer leichten Spannung stehen, die die Dichtflächen zusammenpressen. Im Neuzustand kann eine leichte Verschweissung zwischen den beiden Materialien eine zusätzliche Dichtung bilden. Diese geht allerdings beim ersten Öffnen verloren.

Da das Spritzgiessverfahren erhöhte Temperaturen erfordert und nach dem Giessen kein Arbeitsschritt mehr notwendig ist, bei dem irgendwelche Innenflächen von zweiteiligen Verschlusseinheiten mit Fremdgegenständen in Kontakt kommen könnten, genügen sie auch ohne speziellen Reinigungsschritt allen hygienischen Anforderungen. Die reversiblen Formschlussmittel zwischen Ausgussteil und Verschlussteil können beliebige Male gelöst und wieder geschlossen werden, für die Dichtigkeit können mehrere, beispielsweise äussere und innere Dichtflächen vorgesehen werden. Der Ausgussteil und der Verschlussteil können neben Bereichen aus verschiedenen Materialien (Dichtflächenpaare) auch Bereiche aus gleichem Material aufweisen, die über Sollbruchstellen verbunden sind, und dadurch als zusätzliche Dichtungsmittel im Neuzustand dienen können. Solche Verbindungsstellen können auch als permanente Verbindung zwischen Verschlussteil und Ausgussteil ausgebildet sein. Während das eine Material, das denjenigen Teil der Verschlusseinheit bildet, der an das Gebinde anschliesst, hauptsächlich durch diese Funktion bestimmt ist, ist das zweite Material in weiten Grenzen frei wählbar, immer unter der Bedingung, dass es sich an das erste angiessen lässt, ohne mit dem ersten Material in einem zu hohen Masse zu verschmelzen. Mit einem kleinen Mehraufwand können auch beispielsweise zu dekorativen Zwecken weitere Bereiche aus weiteren Materialien gegossen werden, die sich beispielsweise nur durch die Farbe vom Zusatzmaterial unterscheiden. Insbesondere wenn der Verschlussteil durch eine permanente Verbindung am Ausgussteil befestigt ist, sind die möglichen Formen des Verschlussteiles fast unlimitiert.

Nach dem Multimaterialien-Spritzgussverfahren hergestellte Verschlusseinheiten können beispielsweise aus den Materialpaaren Polyäthylen/Polystyrol, Polypropylen/Styrol-butadien oder Polypropylen/Polyäthylen hergestellt werden, die alle für einen Kontakt mit Nahrungsmitteln geeignet, ökologisch unanfechtbar und kostengünstig sind.

Ausführungsformen von erfindungsgemässen einteiligen und zweiteiligen Verschlusseinheiten werden im Zusammenhang mit den Figuren 1 bis 5 beschrieben. Die Ausführungsformen nach den Figuren 6 und 7 werden nicht von den Patentansprüchen umfaßt. Dabei zeigen:

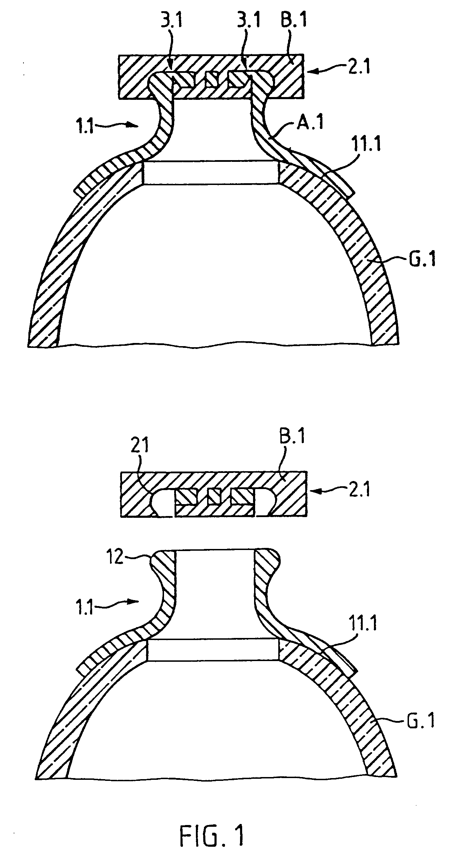

- **Figur 1**: einen Schnitt durch eine beispielhafte, zweiteilige Ausführungsform der erfindungsgemässen Verschlusseinheit nur mit Zusatz-Dichtfunktion, in offenem und geschlossenem Zustand;

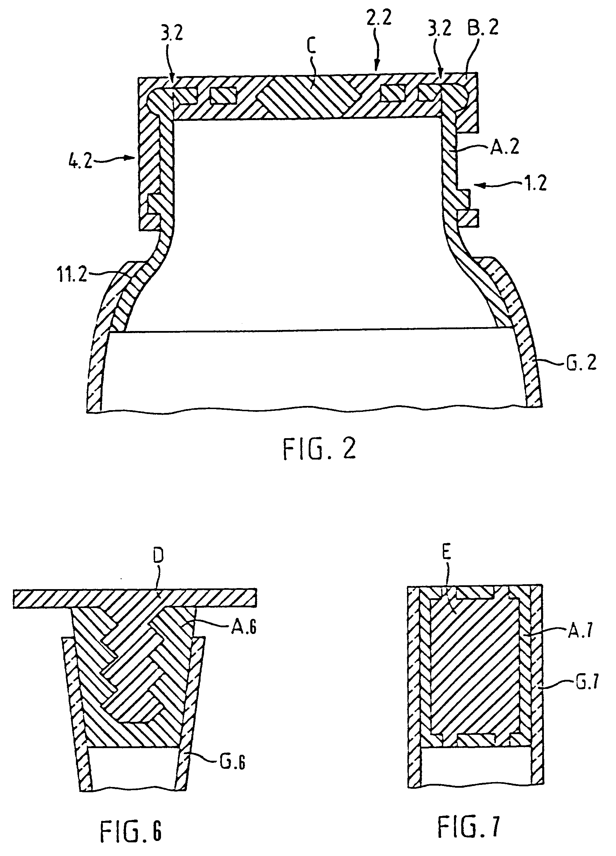

- **Figur 2**: einen Schnitt durch eine weitere beispielhafte Ausführungsform wie Figur 1 mit weiteren Zusatzfunktionen;

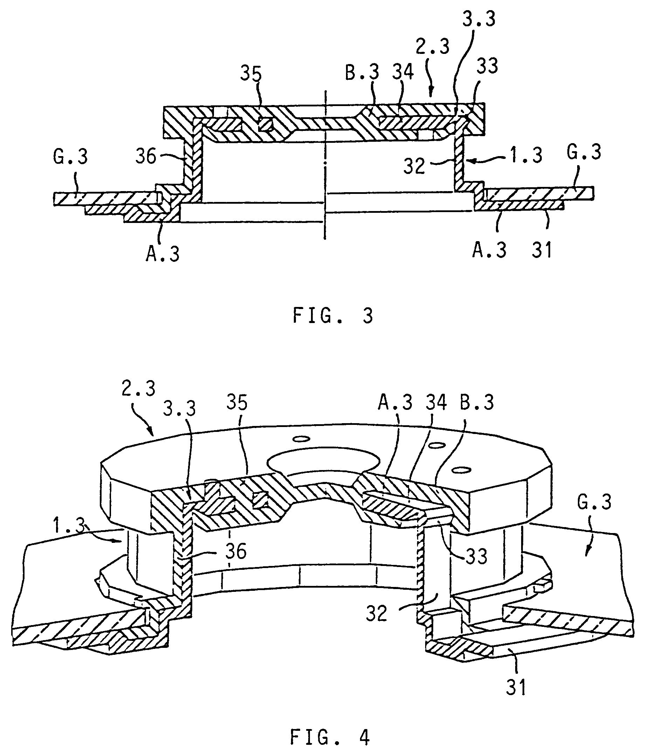

- **Figur 3**: eine weitere beispielhafte zweiteilige Ausführungsform der erfindungsgemässen Verschlusseinheit im Schnitt;
- **Figur 4**: die Ausführungsform gemäss Figur 3 in teilweise geschnittener, dreidimensionaler Darstellung;

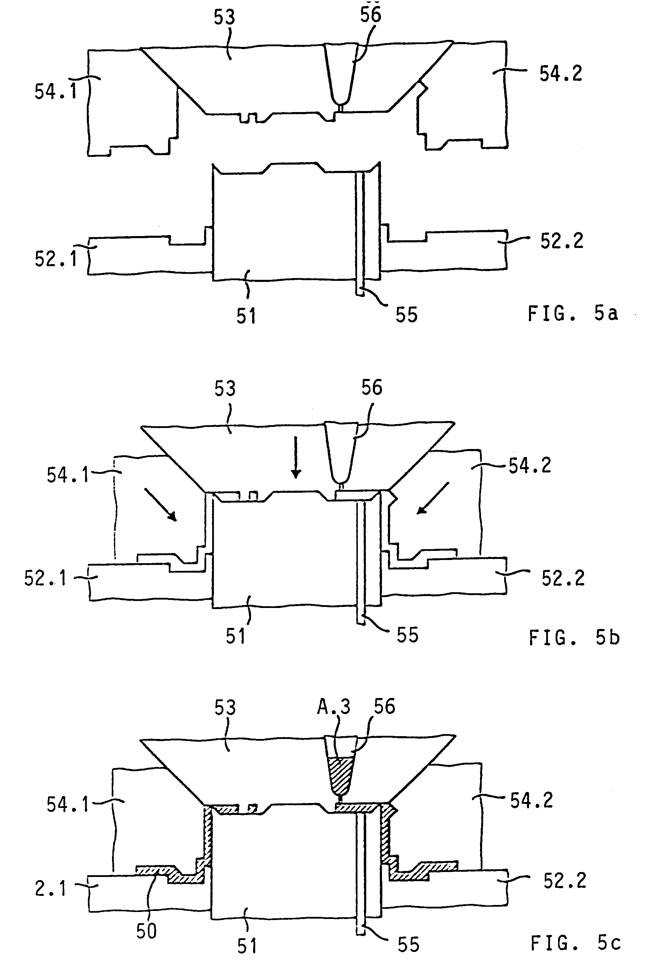

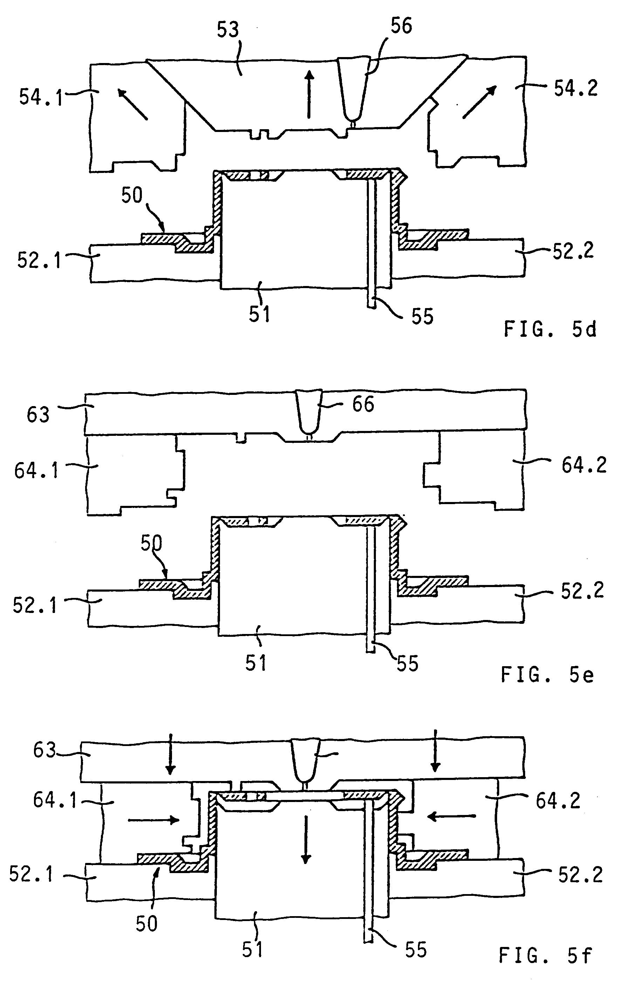

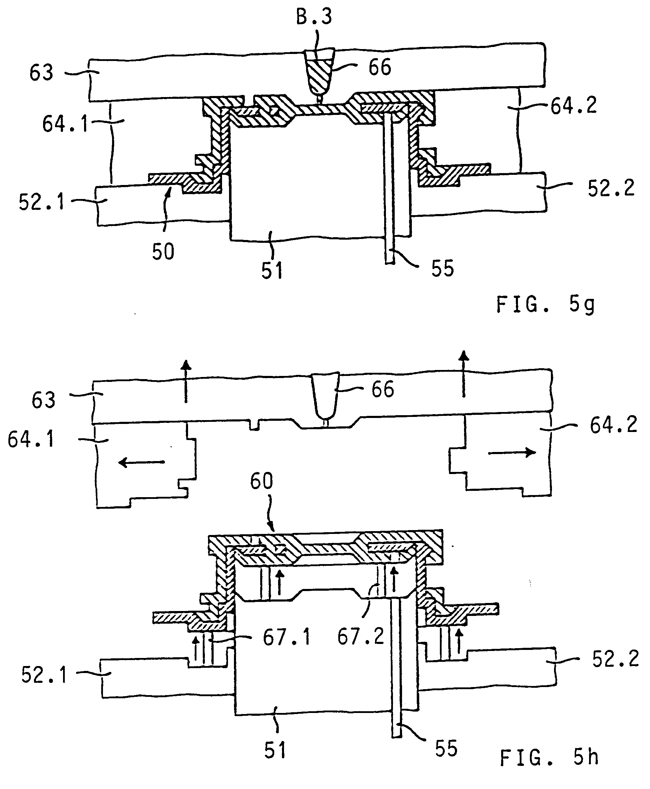

- **Figuren 5a bis 5h**: den Ablauf des erfindungsgemässen Verfahrens zur Herstellung der beispielhaften Ausführungsform der erfindungsgemässen Verschlusseinheit gemäss den Figuren 3 und 4.
- **Figur 6**: einen Schnitt durch eine beispielhafte, einteilige Ausführungsform einer Verschlusseinheit;
- **Figur 7**: einen Schnitt durch eine weitere beispielhafte Ausführungsform wie Figur 6.

**Figur 1** zeigt eine beispielhafte, zweiteilige Ausführungsform der erfindungsgemässen Verschlusseinheit in geschlossenem und geöffnetem Zustand. Die Verschlusseinheit besteht aus einem Ausgussteil 1.1 und einem Verschlussteil 2.1, die in geschlossenem Zustand durch elastische Formschlussmittel verbunden sind. Sie weist Bereiche aus einem Grundmaterial A.1 und Bereiche aus einem Zusatzmaterial B.1 auf, die je zusammenhängend sind. Die Verschlusseinheit kann mit dem Multimaterialien-Spritzgussverfahren in geschlossenem Zustand als ein Stück hergestellt werden.

Der Ausgussteil 1.1 ist mit einer in sich geschlossenen Dichtfläche 11.1 ausgerüstet, die derart gestaltet ist, dass sie rund um eine Öffnung des Gebindes G.1 eine dichte Verbindung mit der Gebindeoberfläche eingehen kann. Der Ausgussteil 1.1 besteht aus dem Grundmaterial A.1, das derartige Eigenschaften haben muss, dass es mit dem Material der Gebindeoberfläche beispielsweise durch Verschweissen oder Verleimen eine im wesentlichen irreversible, dichte Verbindung bilden kann. Ferner muss das Grundmaterial A.1 mit dem Gut, das in dem Gebinde gelagert werden soll, verträglich sein.

Der Verschlussteil 2.1 besteht aus dem Zusatzmaterial B.1, kann aber auch Teile aus dem Grundmaterial A.1 aufweisen, wie dies in der Figur 1 dargestellt ist.

Die die reversible Dichtungsfunktion zwischen Ausgussteil 1.1 und Verschlussteil 2.1 übernehmenden Dichtflächenpaare bestehen je aus dem Grundmaterial A.1 (Dichtfläche 12) und dem Zusatzmaterial B.1 (Dichtfläche 21). Diese Flächen müssen beim Öffnen des Verschlusses voneinander trennbar sein, ohne zerstört zu werden. Dadurch wird eine Eigenschaft des Zusatzmaterials B.1 bestimmt. Das plastische Zusatzmaterial B.1 darf sich mit dem plastischen Grundmaterial A.1 nur soweit verschmelzen, dass das Lösen dieser Verschmelzung den Kraftaufwand zum Öffnen der Verschlusseinheit nicht unannehmbar hoch macht.

Erstreckt sich das Grundmaterial A.1 in zusammenhängenden Bereichen vom Ausgussteil 1.1 in den Verschlussteil 2.1, muss an der potentiellen Trennstelle eine Sollbruchstelle 3.1 vorhanden sein, an der das Grundmaterial mit wenig Kraftaufwand gebrochen werden kann. Eine derartige Sollbruchstelle hat den zusätzlichen Vorteil, dass sie eine zusätzliche Dichtung zwischen Ausgussteil und Verschlussteil bildet, solange die beiden Teile noch nie getrennt wurden. Wenn eine derartige Sollbruchstelle an einem Ort angeordnet ist, wo sie gut sichtbar ist, kann sie auch als "Siegel" dienen und anzeigen, ob die Verschlusseinheit neu, oder bereits einmal geöffnet worden ist.

Der im Verschlussteil 2.1 integrierte, aus dem Grundmaterial A.1 bestehende Bereich ist vorteilhafterweise durch irreversiblen Formschluss mit dem aus dem Zusatzmaterial B.1 bestehenden Bereich verbunden, damit der Verschlussteil als ein Stück von der Öffnung entfernt werden kann. Er kann zudem verschiedene Funktionen wahrnehmen und entsprechend gestaltet sein. Solche Funktionen sind beispielsweise, wie bereits erwähnt, die Dichtfunktion im neuen Zustand und die Siegelfunktion. Ferner kann das Grundmaterial A.1 im Verschlussteil 2.1 auch eine Funktion der mechanischen Stabilität übernehmen, sodass das Zusatzmaterial B.1 entsprechend schwach gewählt werden kann. Soll als Zusatzmaterial B.1 ein Material mit nur beschränkter Verträglichkeit mit dem im Gebinde zu lagernden Gut verwendet werden, kann der aus dem Grundmaterial A.1 bestehende Bereich des Verschlussteiles 2.1 auch dessen ganze Innenoberfläche bedecken, sodass wenigstens im Neuzustand das Gut nicht mit dem Zusatzmaterial B.1 in Berührung kommt.

Es sind auch Ausführungsvarianten denkbar, in denen der Ausgussteil 1.1 Bereiche aus dem Zusatzmaterial B.1 aufweist und diese durch eine Sollbruchstelle mit den entsprechenden Bereichen des Verschlussteiles 2.1 verbunden sind. Auch Ausführungsformen, in denen Ausguss- und Verschlussteil Bereiche beider Materialien aufweisen und in jedem Material Sollbruchstellen vorhanden sind, sind möglich, ebenso Ausführungsformen, deren Ausgussteil nur aus dem Grundmaterial und Verschlussteil nur aus dem Zusatzmaterial bestehen und die dann keine Sollbruchstellen aufzuweisen brauchen.

Eine beispielhafte Anwendung für eine Verschlusseinheit gemäss Figur 1 ist eine Verschlusseinheit für eine Flasche für hochviskose Flüssigkeiten, bspw. Sirup, die einen Ausgussteil mit gegenüber dem Flaschenhals verbesserten Ausgusseigenschaften aus Polyäthylen und einen Deckel mit einer Innenschicht aus Polyäthylen und zwei Aussenschichten aus Polystyrol aufweist.

**Figur 2** zeigt eine Ausführungsform der erfindungsgemässen Verschlusseinheit, die weitere Zusatzfunktionen hat. Sie besteht wie die Ausführungsform der Figur 1 aus einem Ausgussteil 1.2 und einem Verschlussteil 2.2. Das Grundmaterial A.2 bildet Bereiche des Ausgussteiles 1.2, insbesondere die Dichtfläche 11.2, die mit der Oberfläche eines Gebindes G.2 eine dichte irreversible Verbindung bildet, und Bereiche des Verschlussteiles 2.2. Diese Bereiche sind durch eine Sollbruchstelle 3.2 verbunden und ähnlich gestaltet wie die entsprechenden Bereiche der in der Figur 1 dargestellten Ausführungsform. Das Zusatzmaterial B.2 bildet ebenfalls Bereiche des Ausgussteiles 1.2 und des Verschlussteiles 2.2.

Der Ausgussteil 1.2 weist einen inneren Bereich aus dem Grundmaterial A.2 und einen äusseren Bereich aus dem Zusatzmaterial B.2 auf, wobei der äussere Bereich den inneren beispielsweise nur teilweise umgibt und mittels Formschlussmitteln am inneren Bereich befestigt ist. Besteht nun beispielsweise im Bereiche der Stelle 4.2 eine Sollbruchstelle, übernimmt das Zusatzmaterial B.2 die Siegelfunktion, denn ein Bruch an dieser Stelle ist gut sichtbar. Besteht an der Stelle 4.2 keine Sollbruchstelle und ist der Bereich entsprechend gestaltet, dass die Verschlusseinheit auch geöffnet werden kann, ohne dass an dieser Stelle Ausguss- und Verschlussteil getrennt werden müssen, dann übernimmt diese Stelle die Funktion einer permanenten Verbindung zwischen Hals- und Verschlussteil.

Zweiteilige Verschlusseinheiten gemäss dem Stande der Technik mit oder ohne permanente Verbindung zwischen Ausgussteil und Verschlussteil können aus einem Material nach bekannten Verfahren in nur einem Arbeitsgang hergestellt werden. Sie müssen aber in offenem Zustand hergestellt werden, sodass das Schliessen ein weiterer Arbeitsgang bedeutet. Der grosse Vorteil der erfindungsgemässen Verschlusseinheit aus mindestens zwei Materialien besteht darin, dass sie in einem Arbeitsgang in geschlossenem Zustand hergestellt werden kann, was vor allem im Falle von Gebinden, bei denen die Öffnung der Verschlusseinheit nicht zum Einüllen des Gebindeinhaltes benötigt wird (z.B. beschichtete Kartongebinde), als Vorteil geschätzt wird.

Die in der Figur 2 dargestellte Ausführungsform kann noch eine weitere Zusatztunktion haben, die von einem Bereich im Verschlussteil bestehend aus einem weiteren Zusatzmaterial C übernommen wird. Das weitere Zusatzmaterial C kann beispielsweise derart porös sein, dass es das Gebinde für seinen Inhalt zwar dicht verschliesst, aber einen Gasaustausch zwischen dem Inneren des Gebindes und der Aussenluft erlaubt, sodass der Gebindeinhalt kontrolliert altern kann. Das Zusatzmaterial kann auch derart elastisch sein, dass es sich beispielsweise von einer Hohlnadel durchstechen lässt und die Stichöffnung sich nach Entfernen der Nadel wieder dicht schliesst. Damit dient der Bereich aus dem weiteren Zusatzmaterial C einer zusätzlichen Entnahme- oder Zugabefunktion, die bei geschlossener Verschlusseinheit durchgeführt werden kann. Es ist auch denkbar, dass der Bereich aus dem weiteren Zusatzmaterial C gegen aussen durch das Zusatzmaterial B.2 abgeschlossen ist und dass das weitere Zusatzmaterial C Absorbtionseigenschaften aufweist. Im Bereiche aus Zusatzmaterial C kann dann durch Absorption ein Stoff eingelagert werden, der in eine kontrollierte Interaktion mit dem Gebindeinhalt treten kann. Beispiele solcher Stoffe sind Geschmackstoffe, Vitamine oder Konservierungsmittel.

Die Ausgestaltung des Bereiches aus dem weiteren Zusatzmaterial C ist einerseits abhängig von seiner Funktion, andererseits von der Materialpaarung der Materialien A.2 bzw. B.2 und C. Können diese beim Ineinandergiessen im Mikro- und/oder Makrobereich genügend stark verschweisst werden, sind einfache Formgebungen möglich, lassen sie sich nicht verschweissen, sind, wie in der Figur dargestellt, Formschlussmittel notwendig.

Selbstverständlich sind auch Ausführungsformen der erfindungsgemässen Verschlusseinheit mit nur einzelnen der im Zusammenhang mit der Figur 2 beschriebenen Zusatzfunktionen möglich und solche, die weitere Zusatzfunktionen haben.

**Figuren 3 und 4** zeigen im Schnitt (Figur 3) und in teilweise geschnittener Ansicht (Figur 4) eine weiter beispielhafte, zweiteilige Ausführungsform der erfindungsgemässen Verschlusseinheit im Detail. Es handelt sich dabei wiederum um eine aus einem Grundmaterial A.3 und einem Zusatzmaterial B.3 bestehende Einheit, die sich insbesondere für eine Anwendung an einem beschichteten Kartongebinde eignet und deren Ausgussteil 1.3 und Verschlussteil 2.3 Bereiche aus beiden Materialien A.3 und B.3 aufweisen.

Der Ausgussteil ist als im wesentlichen röhrenförmiger Teil (rund oder nicht rund) Teil ausgestaltet, an dessen vom Verschlussteil abgewandtem Ende ein flanschförmiger Anschlussring 31 angeformt ist, der beispielsweise mit der Innenbeschichtung des Gebindes G.3 verschweisst wird. Der Anschlussring 31 und auch das Ausgussrohr 32 des Ausgussteiles 1.3 bestehen aus dem Grundmaterial A.3. Damit Innenbeschichtung des Gebindes G.3 und Anschlussring 31 einfach miteinander verschweisst werden können, wird beispielsweise für ein mit Polyäthylen innenbeschichtetes Gebinde als Grundmaterial A.3 vorteilhafterweise Polyäthylen gewählt. Als Formschlussmittel ist am dem Verschlussteil 2.3 zugewandten, äusseren Ende des Ausgussrohres 32 ein Wulst 33 vorgesehen. Der aus dem Grundmaterial A.3 bestehende Bereich erstreckt sich in den Verschlussteil 2.3 und zwar über die ganze Öffnung des Ausgussrohres 32, wobei rund um die Ausgussöffnung eine Sollbruchstelle 3.3 vorgesehen ist.

Der Verschlussteil 2.3 besteht aus beiden Materialien (A.3, B.3), ein innerer Bereich 34 wird vom Grundmaterial A.3 gebildet, ein diesen inneren Bereich beidseitig umgebender, äusserer Bereich 35 wird vom Zusatzmaterial B.3 gebildet. Dabei sind beide Bereiche mit Öffnungen versehen, die, wie später beschrieben werden soll, hauptsächlich giesstechnisch bedingt sind. Der Verschlussteil weist eine dem Wulst 33 entsprechende Rinne auf. Der aus dem Zusatzmaterial B.3 bestehende Bereich reicht auf der Aussenseite des Ausgussrohres in Form eines Steges 36 bis unter die Gebindewandung, wo er formschlüssig zwischen Gebinde G.3 und Anschlussring 31 festgehalten wird. Der Steg 36 dient beispielsweise als permanente Verbindung zwischen Verschlussteil und Ausgussteil.

Die Dichtflächenpaare zwischen Ausgussteil 1.3 und Verschlussteil 2.3 gemäss Figuren 3 und 4, die an den Aussen und/oder Innenseiten des Ausgussrohres 32 angeordnet sein können, bestehen je aus einer Dichtfläche aus dem Grundmaterial A.3 auf der Ausgussseite und einer Dichtfläche aus dem Zusatzmaterial B.3 auf der Verschlussseite. Bei gegebenem Grundmaterial A.3 (Anschluss an das Gebinde) wird das Zusatzmaterial B.3 mitbestimmt durch die Forderung, dass es möglich sein muss, die Dichtflächenpaare aneinander zu giessen, ohne dass die Materialien in zu hohem Masse verschweissen. Eine Verschweissung zwischen den Dichtflächen, deren Auflösung den für das Öffnen der Verschlusseinheit notwendigen Kraftaufwand nicht massgeblich erhöht, kann toleriert werden oder ist als Zusatzdichtung für den Neuzustand sogar erwünscht. Für eine gute Dichtung ist ebenfalls eine geringe Spannung zwischen Ausgussteil 1.3 und Verschlussteil 2.3 erwünscht, durch die die Dichtflächenpaare gegeneinander gepresst werden. Eine solche Spannung kann beispielsweise erreicht werden, indem die beiden Materialien derart gewählt werden, dass das Zusatzmaterial B.3 einen grösseren, das Grundmaterial A.3 einen kleineren Wärmeausdehnungskoeffizienten besitzt, sodass das Zusatzmaterial B.3 beim Abkühlen mehr schrumpft, und dadurch die äusseren Dichtflächenpaare im Bereiche des Wulstes 33 aufeinander gepresst werden. Ist der Wärmeausdehnungskoeffizient des Grundmaterials A.3 grösser als derjenige des Zusatzmaterials B.3, wird das Ausgussrohr 32 mehr schrumpfen als der Verschlussteil und einen Druck im Bereiche der inneren Dichtflächenpaare ausüben. Diese für eine gute Dichtung erwünschten Spannungen können nicht nur durch entsprechende Materialwahl, sondern auch durch entsprechende Führung des Giessverfahrens, bei dem ja die beiden Materialien beim Aufeinander-Giessen nicht dieselben Temperaturen haben, und durch entsprechende Formgebung der Bereiche der verschiedenen Materialien beeinflusst werden.

Die Verschlusseinheit gemäss Figuren 3 und 4 wird in geschlossenem Zustand durch einen zweistufigen Spritzgussprozess hergestellt, der im Zusammenhang mit den Figuren 5a bis 5h detailliert beschrieben werden soll. Beim ersten Öffnen, also beim ersten Abheben des Verschlussteiles 2.3 vom Ausgussteil 1.3 bricht der Bereich aus dem Grundmaterial A.3 entlang der Sollbruchstelle 3.3 und wird in zwei Teile geteilt, wobei die Zusatzdichtung, die der vom Ausgussteil 1.3 in den Verschlussteil 2.3 reichende Bereich aus dem Grundmaterial A.3 im Neuzustand des Gebindes darstellt, zerstört wird. Der Bereich aus dem Zusatzmaterial B.3 wird im Bereiche des Steges 36 deformiert, bleibt aber intakt, sodass Ausgussteil 1.3 und Verschlussteil 2.3 permanent miteinander verbunden bleiben.

Die folgenden Varianten der in den Figuren 3 und 4 dargestellten Ausführungsform, die teilweise schon im Zusammenhang mit den Figuren 1 und 2 erwähnt wurden, sind denkbar:
- Das Ausgussrohr 32 kann eine andere als kreisförmige Ausgussöffnung aufweisen; dies insbesondere, wenn zwischen dem Verschlussteil und dem Ausgussteil eine permanente Verbindung vorgesehen ist und dadurch der Verschlussteil auch ohne besonderes Augenmerk leicht auf eine eine weniger hohe Symmetrie aufweisende Öffnung aufgesetzt werden kann.
- Der Bereich aus dem Grundmaterial A.3 kann sich auf den Ausgussteil beschränken, wodurch die Zusatzdichtung durch die Sollbruchstelle 3.3 im Neuzustand wegfällt.
- Der Bereich aus dem Zusatzmaterial B.3 kann sich auf den Verschlussteil 2.3 beschränken, das heisst der Steg 36 kann fehlen, wodurch die permanente Verbindung zwischen Ausgussteil und Verschlussteil wegfällt.
- Der in den Ausgussteil 1.3 reichende Bereich aus dem Zusatzmaterial B.3 kann durch Formschlussmittel am Bereich aus dem Grundmaterial A.3 verankert sein, ohne mit dem Gebinde G.3 in Berührung zu kommen.
- Die Verschlusseinheit, insbesondere der Verschlussteil 1.3 kann Bereiche aus einem dritten Material aufweisen, die einer weiteren Funktion oder zu dekorativen Zwecken dienen können (siehe auch Figur 2).
- Der Verschlussteil kann statt dreischichtig (B/A/B) nur zweischichtig (B/A oder A/B) ausgebildet sein.
- Der Auschlussring 31 kann mit der Aussenoberfläche eines aussenbeschichteten Gebindes (siehe auch Figur 1) verbunden sein.

**Figuren 5a bis 5h** zeigen nun als Beispiel eines Herstellungsverfahrens den Ablauf der Herstellung der Ausführungsform der erfindungsgemässen Verschlusseinheit, wie sie im Zusammenhang mit den Figuren 3 und 4 beschrieben wurde. Die Figuren zeigen zeitlich aufeinander folgende Zustände von Giesserzeugnis und Giesswerkzeugen im Schnitt.

Zustand 5a zeigt die Giesswerkzeuge zum Giessen des Vorspritzlings aus dem Grundmaterial A.3. Die Giesswerkzeuge sind relativ gegeneinander bewegliche Teile 51, 52.1, 52.2, 53, 54.1, 54.2 einer Giessform, die Beabstandungsmittel, beispielsweise relativ zu einem Werkzeug 51 bewegbare Stäbe 55, und Ausstossmittel (in diesem Zustand nicht sichtbar) und eine Giessdüse 56 aufweisen.

Zustand 5b ist der Giesszustand der Giesswerkzeuge zum Giessen des Vorspritzlings, beispielsweise aus dem Grundmaterial G.3. Die Werkzeuge bilden in diesem Zustand eine geschlossene Giessform. Die Giessform entsteht, indem die Giesswerkzeuge 51, 52.1 und 52.2 stationär bleiben, die Werkzeuge 53, 54.1 und 54.2 sich dagegen bewegen (Pfeile).

Zustand 5c ist der Zustand während dem eigentlichen Giessen des Vorspritzlings 50 aus dem Grundmaterial A.3, das durch die Giessdüse 56 eingespritzt wird.

Zustände 5d, 5e und 5f zeigen das Auswechseln der Giessform nach dem Giessen des Vorspritzlings. Die Giesswerkzeuge 53, 54.1 und 54.2 werden entfernt (Zustand 5d, Pfeile) und durch die Werkzeuge 63, 64.1 und 64.2 ersetzt (Zustand 5f, Pfeile). Zudem wird das Werkzeug 51 relativ zu den Beabstandungsmitteln 55 derart bewegt, dass zwischen Vorspritzling 50 und Werkzeug 51 ein neurer Giesshohlraum entsteht und der Vorspritzling durch die Beabstandungsmittel 55 in seiner ursprünglichen Giessposition gehalten wird. Vorspritzling 50, Beabstandungsmittel 55 und die Werkzeuge 51 (in neuer Position), 52.1, 52.2 (in ursprünglicher Position), 63, 64.1 und 64.2 bilden nun eine geschlossene Giessform für das fertige Gusserzeugnis.

Zustand 5g ist der Zustand während dem effektiven Giessen eines zweiten Materials, beispielsweise des Zusatzmaterials B.3, das durch die Giessdüse 66 zugeführt wird.

Zustand 5h zeigt die Wegbewegung der Werkzeuge 63, 64.1 und 64.2 (grosse Pfeile) und die Abhebung des Gussteiles 60 von den Werkzeugen 51, 52.1 und 52.2 durch die Ausstosswerkzeuge 67.1 und 67.2 (kleine Pfeile).

Der gesamte Giessvorgang wird beispielsweise auf zwei Giessplätzen (der eine für die Zustände 5a bis 5d, der andere für die Zustände 5e bis 5h) durchgeführt, zwischen denen die Giesswerkzeuge 51, 52.1 und 52.2 (in einer Richtung mit dem Vorspritzling) pendeln. Die Zykluszeit, das heisst die Zeit, die notwendig ist, um eine Verschlusseinheit herzustellen, ist dann gleich der Zeit, die für das Durchlaufen der Zustände 5a bis 5d oder 5e bis 5h notwendig ist. Durch mehrere parallel funktionierende Giessplätze kann die Zykluszeit weiter reduziert werden.

Ein Teil der Formgebung des Vorspritzlings und des fertigen Gussteiles ist bedingt durch die angewendete Giesstechnik. Soll ein Vorspritzling beidseitig mit Zusatzmaterial umgossen werden, muss er entsprechende Öffnungen aufweisen. Der Vorspritzling kann nicht vollständig mit dem Zusatzmaterial umgossen werden, da er durch Werkzeuge (Giesswerkzeuge 52.1 und 52.2, Beabstandungsmittel 55) für die zweite Stufe des Giessens in Giessposition gehalten werden muss.

Um den Aufwand des Mehrmaterialien-Spritzgussverfahrens in einem vertretbaren Rahmen zu halten, ist es wichtig, dass die Giesswerkzeuge eine nicht allzu komplizierte Form haben und dass die Zykluszeit, das heisst die für einen Giesszyklus vom Zustand 5a bis zum Zustand 5d (siehe oben) notwendig ist, möglichst kurz ist. Die Zykluszeit kann kurz gehalten werden, wenn darauf geachtet wird, dass die zu giessenden Teile derart dünn sind, dass sie sich möglichst während der Zeit, die für die Bewegung der Werkzeuge aufgewendet werden muss, genügend abkühlen können, um für den nächsten Zustand genügend stabil zu sein. Dies wird unter anderem dadurch erreicht, dass Teile, die für eine bestimmte mechanische Festigkeit eine bestimmte Dicke aufweisen müssen aus beiden Materialien in zwei oder drei Schichten gegossen werden. Der Verschlussteil, der im Zusammenhang mit den Figuren 3 und 4 beschriebenen Ausführungsform ist derart konzipiert.

**Figur 6** zeigt eine einteilige Ausführungsform der erfindungsgemässen Verschlusseinheit, die durch ihre Einteiligkeit keine Zusatz-Dichtfunktion hat. Es handelt sich dabei um einen Stopfen, der wiederum aus zwei Materialien besteht, wobei das Grundmaterial A.6 die Dichtfunktion, in diesem Falle reversibel, gegen die Gebindeoberfläche (G.6) übernimmt, das Zusatzmaterial D eine oder mehrere Zusatzfunktionen, die im dargestellten Falle beispielsweise eine Funktion der mechanischen Festigkeit oder eine ästhetische Funktion sein kann. Die Berührungsflächen zwischen den beiden Materialien A.6 und D müssen irreversibel verbunden sein, das heisst die Materialpaarung ist derart zu wählen, dass die Flächen sich beim Ineinandergiessen verschweissen, und/oder ihre Formgebung ist derart zu wählen (wie dargestellt), dass sie formschlüssig miteinander verbunden sind. Das Grundmaterial A.6 wird auch in diesem Falle bestimmt durch seine Dichtfähigkeiten gegen die Oberfläche des Gebindes und durch seine Verträglichkeit mit dem Gebindeinhalt. Das Zusatzmaterial D wird bestimmt durch die Zusatzfunktion und durch die Anforderungen an die Materialpaarung von Grund- und Zusatzmaterial.

Eine einteilige erfindungsgemässe Verschlusseinheit kann auch die Form eines Schraub- oder Schnappdeckels haben.

**Figur 7** zeigt eine weitere, einteilige Ausführungsform der erfindungsgemässen Verschlusseinheit. Es handelt sich dabei um eine Ausführungsform, in der das Zusatzmaterial E Zusatzfunktionen gemäss dem Zusatzmaterial C der Ausführungsform der Figur 2 übernehmen kann. In einem derartigen Stopfen wird wiederum die Dichtfunktion gegen die Gebindeoberfläche (G.7) vom Grundmaterial A.7 und Zusatzfunktionen wie mechanische Stabilität, Porosität und/oder Absorptionsfähigkeit vom Zusatzmaterial E übernommen.

## Patentansprüche

1. Verschlusseinheit aus thermoplastischem Kunststoff für ein Gebinde (G.1/2/3/6/7) zur Handhabung und Lagerung von fliessfähigem Gut, welche einen zusammenhängenden Bereich aus einem Grundmaterial (A.1/2/3/6/7) und mindestens einen zusammenhängenden Bereich aus einem Zusatzmaterial (B.1/2/3,C,D,E) aufweist, wobei sich Grundmaterial (A.1/2/3/6/7) und Zusatzmaterial (B.1/2/3,C,D,E) in mindestens einer Eigenschaft unterscheiden, wobei das Grundmaterial (A.1/2/3/6/7) und das Zusatzmaterial (B.1/2/3,C,D,E) ohne Ineinanderschmelzen aneinander gegossen sind, **dadurch gekennzeichnet,** dass die Verschlusseinheit in formschlüssiger Verbindung einen Ausgussteil (1.1/2/3) und einen Verschlussteil (2.1/2/3) aufweist, wobei der Ausgussteil (1.1/2/3) aus dem Grundmaterial (A.1/2/3/6/7) besteht und wobei der Verschlussteil (2.1/2/3) aus dem Grundmaterial (A.1/2/3/6/7) und aus dem Zusatzmaterial (B.1/2/3,C,D,E) besteht, dass der Ausgussteil (1.1/2/3/6/7) mindestens eine Dichtfläche (12) aus dem Grundmaterial (A.1/2/3/6/7) aufweist und der Verschlussteil (2.1/2/3) mindestens eine Dichtfläche (21) aus dem ersten Zusatzmaterial (B.1/2/3) aufweist, dass im Verschlussteil (1.1/2/3) Bereiche des Grundmaterials (A.1/2/3) derart am Zusatzmaterial (B.1/2/3) angeordnet sind, dass sie unter Zerstörung der Verbindung zum Grundmaterial (A.1/2/3) voneinander trennbar sind und die Dichtflächen (12,21) im geschlossenen Zustand der Verschlusseinheit so aufeinander liegen, dass sie eine wieder verschliessbare, dichte formschlüssige Verbindung zwischen Ausgussteil (2.1/2/3) und Verschlussteil (1.1/2/3) bilden.

2. Verschlusseinheit nach Anspruch 1, **dadurch gekennzeichnet**, dass der Grundmaterialbereich eine in sich geschlossene Dichtfläche (11.1/2) aufweist, die um eine Gebindeöffnung dicht mit dem Material des Gebindes verbindbar ist.

3. Verschlusseinheit nach Anspruch 1 oder 2, **dadurch gekennzeichnet**, dass sie mindestens einen Bereich aus einem Zusatzmaterial (B.2/3) aufweist, der sich auch im Ausgussteil (2.2/3) erstreckt.

4. Verschlusseinheit nach Anspruch 3, **dadurch gekennzeichnet**, dass mindestens ein Bereich, der sich sowohl im Verschlussteil (2.1/2/3) als auch im Ausgussteil (1.1/2/3) erstreckt, am Übergang vom Verschlussteil in den Ausgussteil mindestens eine Sollbruchstelle (3.1/2/3) aufweist.

5. Verschlusseinheit nach Anspruch 4, **dadurch gekennzeichnet**, dass mindestens eine Sollbruchstelle mindestens teilweise um die Ausgussöffnung angeordnet ist.

6. Verschlusseinheit nach einem der Ansprüche 1 bis 5, **dadurch gekennzeichnet**, dass die Formschlussmittel mit denen der Verschlussteil (2.1/2/3) auf dem Ausgussteil (1.1/2/3) befestigt wird, aus mindestens einem Wulst (33) auf der Aussenseite des Ausgussteiles und einer entsprechenden Rinne am Verschlussteil bestehen.

7. Verschlusseinheit nach einem der Ansprüche 1 bis 5, **dadurch gekennzeichnet**, dass der Bereich aus dem Grundmaterial (A.3) am vom Verschlussteil abgewandten Ende des Ausgussteiles einen flanschförmigen Anschlussring (31) bildet, dass das Grundmaterial (A.3) ein Material ist, mit dem Kartongebinde beschichtet werden, und dass die dem Verschlussteil zugewandte Oberfläche des Anschlussringes (31) derart gestaltet ist, dass sie mit der Beschichtung eines Kartongebindes (G.3) verschweisst werden kann.

8. Verschlusseinheit nach einem der Ansprüche 1 bis 7, **dadurch gekennzeichnet**, dass das Grundmaterialial (A.1/2/3) und das Zusatzmaterial (B.1/2/3), aus denen die Dichtflächenpaare zwischen Ausgussteil und Verschlussteil bestehen, sich in Ihrem Wärmeausdehnungskoeffizienten unterscheiden.

9. Verschlusseinheit nach einem der Ansprüche 1 bis 8, **dadurch gekennzeichnet**, dass sie aus den Materialpaaren Polyäthylen/Polystyrol, Polypropylen/Styrol-butadien oder Polypropylen/Polyäthylen besteht.

10. Verschlusseinheit nach einem der Ansprüche 1 bis 9, **dadurch gekennzeichnet**, dass das Zusatzmaterial (B.3) einen kleinen Prozentsatz des Grundmateriales (A.3) enthält.

11. Verschlusseinheit nach einem der Ansprüche 1 bis 10, **dadurch gekennzeichnet**, dass mindestens ein Bereich aus einem Material, der sich über Ausgussteil und Verschlussteil erstreckt, beim Entfernen des Verschlussteiles vom Ausgussteil zusammenhängend bleibt.

12. Verschlusseinheit nach einem der Ansprüche 1 bis 11, **dadurch gekennzeichnet**, dass sie zusätzlich Bereiche aus einem weiteren Zusatzmaterial (C,D,E) aufweist.

13. Verschlusseinheit nach Anspruch 12, **dadurch gekennzeichnet**, dass die Bereiche aus dem weiteren Zusatzmaterial (C) durch Formschluss und/oder durch ineinandergeschmolzene Berührungsflächen irreversibel mit dem Verschluss- und/oder mit dem Ausgussteil verbunden sind.

14. Verschlusseinheit nach Anspruch 2, **dadurch gekennzeichnet**, dass die geschlossene Dichtfläche aus dem Grundmaterial (A.6/7) derart ausgebildet ist, dass sie zusammen mit der Innenoberfläche des Halses des Gebindes (G.6/7) eine reversible, dichte Verbindung bilden kann.

15. Verschlusseinheit nach Anspruch 14, **dadurch gekennzeichnet**, dass die Bereiche aus Zusatzmaterialien untereinander und mit dem Bereich aus dem Grundmaterial durch Formschluss oder Ineinanderschmelzen der Oberflächen irreversibel miteinander verbunden sind.

16. Herstellungsverfahren für eine Verschlusseinheit nach einem der Ansprüche 1 bis 15 durch Giessen eines Vorspritzlings aus einem ersten Material, mindestens teilweisem Auswechseln der Giessform und Giessen des zweiten Marterials, wobei der Vorspritzling wenigstens einen Teil der Giessform für den Giessteil aus dem zweiten Material bildet.

17. Gebinde aus beschichtetem Karton (G.3) für fliessfähiges Gut mit einer der Verschlusseinheiten nach einem der Ansprüche 1 bis 12.

## Claims

1. Closure unit made from a thermoplastic material for a container (G.1/2/3/6/7) for handling and storing free-flowing products, which has a cohesive area of a base material (A.1/2/3/6/7) and at least one cohesive area of an additional material (B.1/2/3, C, D, E), in which the basematerial (A.1/2/3/6/7) and additional material (B.1/2/3, C, D, E) differ as regards at least one characteristic, the base material (A. 1/2/3/6/7) and additional material (B.1/2/3, C, D, E) are moulded on one another without melting together, characterized in that in positive connection the closure unit has a pouring part (1.1/2/3) and a closure part (2.1/2/3), the pouring part (1.1/2/3) being made from the base material (A.1/2/3/6/7) and the closure part (2.1/2/3) from the base material (A.1/2/3/6/7) and the additional material (B.1/2/3, C, D, E), that the pouring part (1.1/2/3/6/7) has at least one sealing face (12) from the base material (A.1/2/3/6/7) and the closure part (2.1/2/3) at least one sealing face (21) from the first additional material (B.1/2/3), that in the closure part (1.1/2/3) areas of the base material (A.1/2/3) are positioned on the additional material (B.1/2/3) in such a way that they are separable from one another accompanied by the destruction of the connection with the basematerial (A.1/2/3) and in the closed state of the closure unit the sealing faces (12, 21) rest on one another in such a way that they form a resealable, tight, positive connection between the pouring part (2.1/2/3) and closure part (1.1/2/3).

2. Closure unit according to claim 1, characterized in that the base material area has a closed sealing face (11.1/2), which is tightly connectable round a container opening with the container material.

3. Closure unit according to claim 1 or 2, characterized in that it has at least one area of an additional material (B.2/3), which also extends in the pouring part (2.2/3).

4. Closure unit according to claim 3, characterized in that at least one area, extending both in the closure part (2.1/2/3) and in the pouring part (1.1/2/3), has at the transition from the closure part into the pouring part at least one predetermined breaking point (3.1/2/3).

5. Closure unit according to claim 4, characterized in that at least one predetermined breaking point is at least partly located round the pouring opening.

6. Closure unit according to one of the claims 1 to 5, characterized in that the positive engagement means with which the closure part (2.1/2/3) is fixed to the pouring part (1.1/2/3), comprises at least one bead (33) on the outside of the pouring part and a corresponding channel on the closure part.

7. Closure unit according to one of the claims 1 to 5, characterized in that the area of the base material (A.3) on the end of the pouring part remote from the closure part forms a flange-like joining ring (31), that the base material (A.3) is a material with which the cardboard container is coated and that the surface of the joining ring (31) facing the closure part is so designed that it can be welded to the coating of a cardboard container (G.3).

8. Closure unit according to one of the claims 1 to 7, characterized in that the base material (A.1/2/3) and additional material (B.1/2/3) from which the sealing face pairs between the pouring part and the closure part are formed differ in their thermal expansion coefficient.

9. Closure unit according to one of the claims 1 to 8, characterized in that it is made from the material pairs polyethyelene/polystyrene, polypropylene/styrene-butadiene or polypropylene/polyethylene.

10. Closure unit according to one of the claims 1 to 9, characterized in that the additional material (B.3) contains a small percentage of the base material (A.3).

11. Closure unit according to one of the claims 1 to 10, characterized in that at least one area of a material extending over the pouring part and the closure part remains cohesive on removing the closure part from the pouring part.

12. Closure unit according to one of the claims 1 to 11, characterized in that it has additional areas of a further additional material (C, D, E).

13. Closure unit according to claim 12, characterized in that areas of the further additional material (C) are connected by positive engagement and/or by melted together contact faces in irreversible manner with the closure and/or the pouring part.

14. Closure unit according to claim 2, characterized in that the closed sealing face of the base material (A.6/7) is so constructed that it forms a reversible, tight connection with the inner surface of the neck of the container (G.6/7).

15. Closure unit according to claim 14, characterized in that the areas of additional materials are irreversibly interconnected with one another and with the area of the base material by positive engagement or melting together.

16. Manufacturing method for a closure unit according to one of the claims 1 to 15 by moulding a blank from a first material, at least partial replacement of the hollow mould and moulding the second material, the blank forming at least part of the mould for the moulded part from the second material.

17. Container made from coated cardboard (G.3) for free-flowing products with one of the closure units according to one of the claims 1 to 12.

## Revendications

1. Unité de fermeture en matière thermoplastique pour un récipient (G.1/2/3/6/7) servant à la manipulation et au stockage d'une marchandise liquide, qui présente une zone d'un seul tenant en un matériau de base (A.1/2/3/6/7) et au moins une zone d'un seul tenant en un matériau supplémentaire (B.1/2/3,C,D,E), le matériau de base (A.1/2/3/6/7) et le matériau supplémentaire (B.1/2/3,C,D,E) se distinguant par au moins une propriété, le matériau de base (A.1/2/3/6/7) et le matériau supplémentaire (B.1/2/3,C,D,E) étant coulés l'un sur l'autre sans fusionner l'un avec l'autre, caractérisée en ce que l'unité de fermeture présente en liaison par engagement positif une partie verseuse (1.1/2/3) et une partie de fermeture (2.1/2/3), la partie verseuse (1.1/2/3) se composant du matériau de base (A.1/2/3/6/7) et la partie de fermeture (2.1/2/3) se composant du matériau de base (A.1/2/3/6/7) et du matériau supplémentaire (B.1/2/3,C,D,E), en ce que la partie verseuse (1.1/2/3/6/7) présente au moins une surface d'étanchéité (12) faite du matériau de base (A.1/2/3/6/7) et la partie de fermeture (2.1/2/3) présente au moins une surface d'étanchéité (21) faite du premier matériau supplémentaire (B.1/2/3), en ce que des parties du matériau de base (A.1/2/3) sont disposées sur le matériau supplémentaire (B.1/2/3) dans la partie verseuse (1.1/2/3) de telle sorte qu'ils puissent être séparés l'un de l'autre en détruisant la liaison avec le matériau de base (A.1/2/3) et les surfaces d'étanchéité (12, 21) reposent l'une sur l'autre lorsque l'unité de fermeture est fermée de telle sorte qu'elles forment une liaison par engagement positif étanche et refermable entre la partie verseuse (1.1/2/3) et la partie de fermeture (2.1/2/3).

2. Unité de fermeture selon la revendication 1, caractérisée en ce que la zone de matériau de base présente une surface d'étanchéité (11.1/2) fermée en soi, qui peut être reliée de manière étanche au matériau du récipient autour d'une ouverture du récipient.

3. Unité de fermeture selon la revendication 1 ou 2, caractérisée en ce qu'elle présent eau moins une zone faite d'un matériau supplémentaire (B.1/2) qui s étend aussi dans la partie de fermeture (2.2/3).

4. Unité de fermeture selon la revendication 3, caractérisée en ce qu'au moins une zone qui s'étend aussi bien dans la partie de fermeture (2.1/2/3) que dans la partie verseuse (1.1/2/3) présente à la transition entre la partie de fermeture et la partie verseuse au moins une zone destinée à la rupture (3.1/2/3).

5. Unité de fermeture selon la revendication 5, caractérisée en ce qu'au moins une zone destinée à la rupture est disposée au moins partiellement autour de l'ouverture d'écoulement.

6. Unité de fermeture selon l'une des revendications 1 à 5, caractérisée en ce que les moyens d'engagement positif par lesquels la partie de fermeture (2.1/2/3) est fixée sur la partie verseuse (1.1/2/3) se composent d'au moins un bourrelet (33) sur la face extérieure de la partie verseuse et d'une rainure correspondante sur la partie de fermeture.

7. Unité de fermeture selon l'une des revendications 1 à 5, caractérisée en ce que la zone faite du matériau de base (A.3) forme à l'extrémité de la partie verseuse éloignée de la partie de fermeture une bague de raccordement (31) en forme de bride, en ce que le matériau de base (A.3) est un matériau avec lequel des récipients en carton sont enduits, et en ce que la surface de la bague de raccordement (31) orientée vers la partie de fermeture est conformée de façon à pouvoir être soudée avec le revêtement d'un récipient (G.3) en carton.

8. Unité de fermeture selon l'une des revendications 1 à 7, caractérisée en ce que le matériau de base (A.1/2/3) et le matériau supplémentaire (B.1/2/3) dont se composent les paires de surfaces d'étanchéité entre la partie verseuse et la partie de fermeture se distinguent par leurs coefficients de dilatation thermique.

9. Unité de fermeture selon l'une des revendications 1 à 8, caractérisée en ce qu'elle se compose des paires de matériau polyéthylène-polystyrène, polypropylène-butadiène-styrène ou polypropylène-polyéthylène.

10. Unité de fermeture selon l'une des revendications 1 à 9, caractérisée en ce que le matériau supplémentaire (B.3) contient un petit pourcentage du matériau de base (A.3).

11. Unité de fermeture selon l'une des revendications 1 à 10, caractérisée en ce qu'au moins une zone faite d'un matériau qui s'étend sur la partie verseuse et la partie de fermeture reste d'un seul tenant lorsque la partie de fermeture est enlevée de la partie verseuse.

12. Unité de fermeture selon l'une des revendications 1 à 11, caractérisée en ce qu'elle présente des zones supplémentaires faites d'un autre matériau supplémentaire (C,D,E).

13. Unité de fermeture selon la revendication 12, caractérisée en ce que les zones faites de l'autre matériau supplémentaire (C) sont reliées de manière irréversible à la partie de fermeture et/ou à la partie verseuse par engagement positif et/ou par des surfaces de contact fusionnées l'une avec l'autre.

14. Unité de fermeture selon la revendication 2, caractérisée en ce que la surface d'étanchéité fermée faite du matériau de base (A.6/7) est conformée de telle sorte qu'elle puisse former avec la surface intérieure du goulot du récipient (G.6/7) une liaison étanche réversible.

15. Unité de fermeture selon la revendication 14, caractérisée en ce que les zones faites des matériaux supplémentaires sont reliées entre elles et avec la zone de matériau de base de manière irréversible par engagement positif ou fusion des surfaces.

16. Procédé de fabrication pour une unité de fermeture selon l'une des revendications 1 à 15 par coulée d'une ébauche d'injection faite d'un premier matériau, échange au moins partiel du moule de coulée et coulée du deuxième matériau, l'ébauche d'injection formant au moins une partie du moule de la pièce moulée dans le deuxième matériau.

17. Récipient en carton enduit (G.3) pour des marchandises liquides, avec l'une des unités de fermeture selon l'une des revendications 1 à 12.
